# EUROPEAN PATENT SPECIFICATION

(11) **EP 1 418 627 B1**
(45) Date of publication and mention of the grant of the patent: **29.05.2013**
(21) Application number: 03024397.6
(22) Date of filing: 24.10.2003
(51) Int. Cl.: H01L 31/042

(54) **Solar cell module and edge face sealing member for same**
Solarzellenmodul mit einem Kantenabdichtungselement
Module de cellules solaires avec un elément d'étanchéité

(30) Priority: 30.10.2002 JP 2002316555
(43) Date of publication of application: 12.05.2004
(73) Proprietor: Sharp Kabushiki Kaisha, Osaka-shi, Osaka 545-8522 (JP)
(72) Inventor: Yoshida, Hiroyuki, Kitakatsuragi-gun Nara 636-0053 (JP); Fukuda, Yukio, Kashiba-shi Nara 639-0223 (JP); Umemoto, Akimasa, Sakurai-shi Nara 633-0062 (JP)
(74) Representative: Müller - Hoffmann & Partner

(56) References cited:
- EP-A- 1 039 549
- EP-A1- 0 879 870
- EP-A2- 0 531 869
- JP-A- 9 012 083
- JP-A- 11 307 791
- JP-A- 61 005 583
- US-A- 4 123 409

## Description

### BACKGROUND OF INVENTION

The present invention relates to a solar cell module capable of being installed on roof portions of residential buildings or the like and to an edge face sealing member for same, and in particular, pertains to an improvement for ensuring watertightness between solar cell module body or bodies and frame body or bodies supporting same.
EP-A2-0 531 869 relates to a clamp for fastening plate-form bodies to a flat support plate. A clamp for fastening plate-form bodies, such as solar panels, onto a support plate comprises two U-shaped portions opening in opposite directions with a common shank portion of the two U-shaped portions. The body, such as the solar panel, has its edge received in one of the U-shaped portions, such as the upper U-shaped portion, while the opposite edge is received in a lower U-shaped portion of an adjacent row of clamps. Preferably, an elastic part having a U-shaped and profiled surfaces is placed between each of the U-shaped portions and edges of the bodies to prevent damage to the plate-shaped bodies.

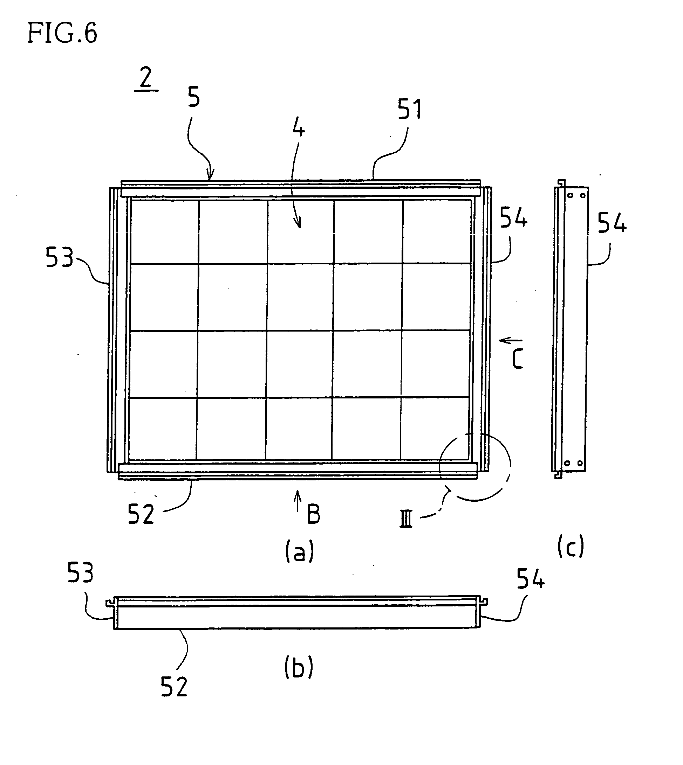

As shown in FIG. 6, a solar cell module might typically comprise solar cell module body or bodies 4 and frame body or bodies 5. FIG. 6 (a) is a plan view of solar cell module 2; FIG. 6 (b) indicating the view from arrow B at FIG. 6 (a), and FIG. 6 (c) indicating the view from arrow C at FIG. 6 (a).

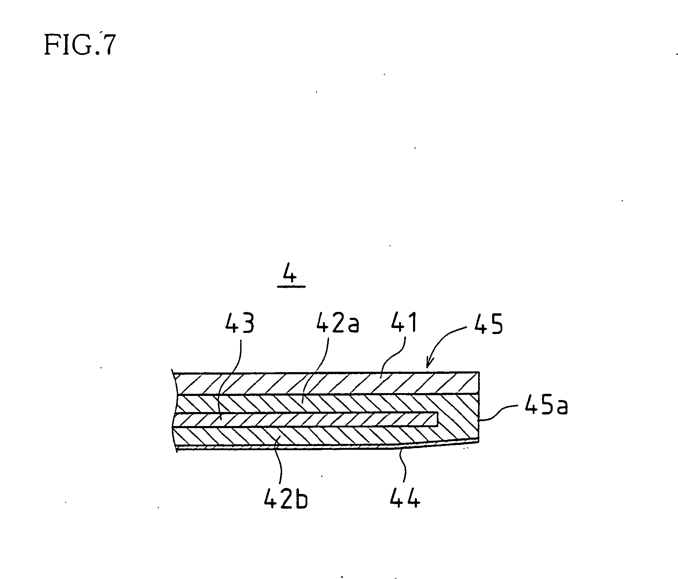

The integrally laminated superstrate construction of solar cell module body 4, as indicated by the partial enlarged view of edge portion 45 thereof shown in FIG. 7-wherein light-receiving-surface sealing resin layer(s) 42a comprising ethylene vinyl acetate (EVA), solar cell(s) 43 formed from polycrystalline silicon, back-surface sealing resin layer(s) 42b comprising ethylene vinyl acetate (EVA), and weather-resistant back-surface sealing film(s) 44 are laminated in order over (or beneath, as shown in the drawing) light-receiving glass surface(es) 41 constituting the front surface thereof-is known. This being the case, the solar cell module body 4 may take the form of a rectangular sheet and its weather-resistance may be assured. Note that the foregoing solar cell(s) 43 may be formed from monocrystalline silicon and/or amorphous silicon and/or the like.

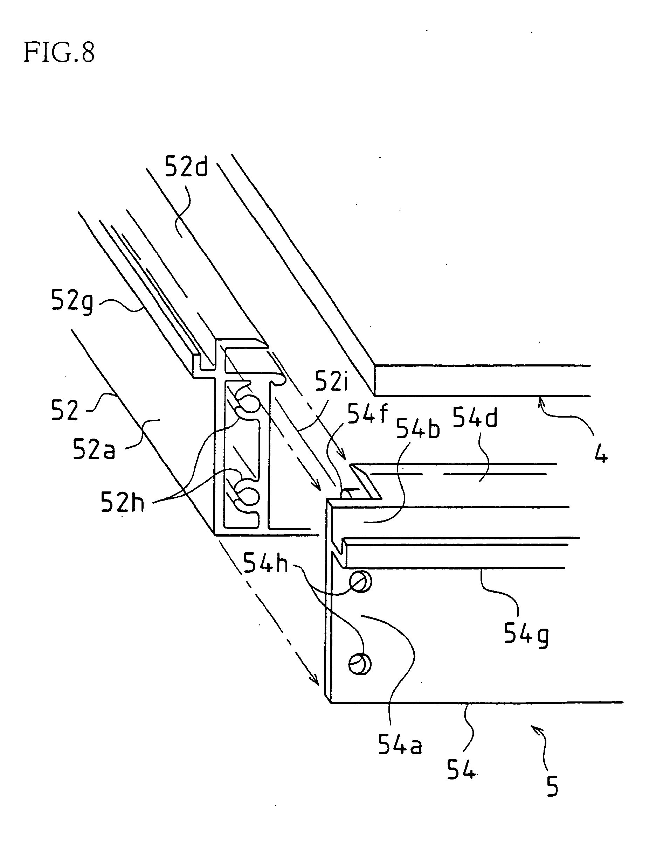

As shown in FIGS. 6 and 8 (the latter being an oblique exploded view of region III in FIG. 6), frame body 5-which retains the four sides of the foregoing solar cell module body 4-comprises upper frame element(s) 51, lower frame element(s) 52, and pair(s) of left and right side edge frame elements 53 and 54, these frame elements 51, 52, 53, and 54 being assembled together in integral fashion to form a frame-like structure. Note that FIG. 8 shows the region at which lower frame element 52 and right side edge frame element 54 are assembled together.

Frame elements 51, 52, 53, and 54 are respectively formed by aluminum extrusion. Upper frame element 51 retains the edge rim of solar cell module body 4 at the side thereof nearest the residence roof peak. Lower frame element 52 retains the edge rim of solar cell module body 4 at the side thereof nearest the residence eaves. Side edge frame elements 53 and 54 respectively retain both the left and the right side rim of solar cell module body 4, and also join together the two edge rims of upper frame element 51 and lower frame element 52.

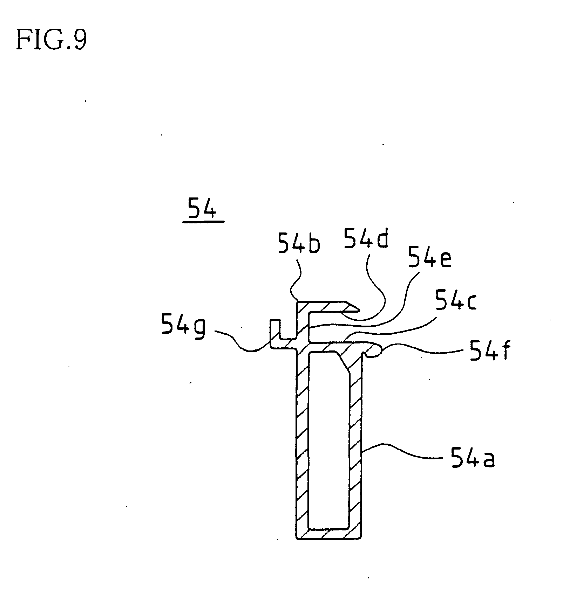

Next, basic constitution of these frame elements 51, 52, 53, and 54 will be described in detail. Because frame elements 51, 52, 53, and 54 share a common basic constitution, FIG. 9 will be used to describe cross-sectional shape of side edge frame element 54. Note that, in the description of cross-sectional shape which follows, the left side in FIG. 9 is taken to be the outside, constituting the outer rim of solar cell module 2; and the right side in the drawing is taken to be the inside, i.e., the side at which solar cell module body 4 is supported.

As shown in FIG. 9, side edge frame element 54 is provided with frame main body 54a having closed rectangular cross-section, and is also provided with bent extension region 54b which extends upward from the outside edge (left edge in the drawing) at the top face of this frame main body 54a and thereafter bends toward the inside (right side in the drawing). This permits formation of groove 54e, within which the outside perimeter edge portion of solar cell module body 4 is captured between horizontal portion 54d of bent extension region 54b and top face 54c of frame main body 54a. Furthermore, flange 54f, which abuts the bottom face of solar cell module body 4, is disposed so as to project from the inside edge (the edge on the right side in the drawing) of top face 54c of frame main body 54a. Note that the width dimension (the dimension in the vertical direction in FIG. 9) of this groove 54e is set so as to be slightly larger than the thickness dimension of solar cell module body 4.

Furthermore, disposed so as to project from the side face at the outside (left side in drawing) of frame main body 54a is extension 54g, which extends slightly in a horizontal direction before bending upward.

Note also that reference numeral 52h in FIG. 8 indicates screw-receiving portion(s), having screw channels(s), provided at lower frame element 52; and reference numeral 54h indicates screw clearance hole(s) which are provided at side rim frame element 54 opposite these screw-receiving portion(s) 52h.

However, with solar cell module 2 constituted in such fashion, because of the need to ensure adequate watertightness between solar cell module body 4 and frame body 5, and prevent rainwater or the like from entering through gaps therebetween, various methods for achieving watertightness have been proposed conventionally (see, e.g., Japanese Patent Application Publication Kokai No. H13-230440 (2001) (FIG. 6 (a) and FIG. 8 of the instant drawings)).

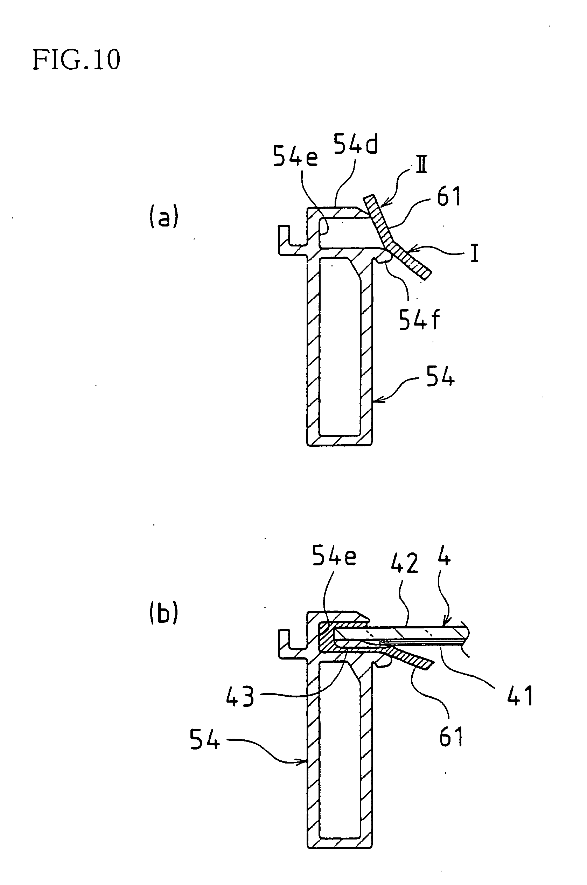

FIG. 10 shows an example of a conventional waterproofing structure for achieving watertightness between solar cell module body 4 and frame body 5, the structure being such that tape-like waterproofing member 61 is inserted in the space between solar cell module body 4 and frame body 5. That is, waterproofing member 61 is arranged so as to enshroud the open portion(s) of groove 54e of side edge frame element 54. This waterproofing member 61 is a sheet-like member formed from EPDM or other such foam material, and is disposed so as to straddle flange 54f from horizontal portion 54d of extension region 54b of side edge frame element 54. Furthermore, this waterproofing member 61 is made to adhere to the tip portion of this flange 54f (region I at FIG. 10 (a)). In other words, as waterproofing member 61 merely contacts, and is not securely fastened to, horizontal portion 54d of bent extension region 54b (region II at FIG. 10 (a)), this edge portion is in fact a free edge. Moreover, the thickness dimension of this waterproofing member 61 is set so as to be slightly larger than a dimension which is one half of the value obtained by subtracting the thickness dimension of solar cell module body 4 from the width dimension (the dimension in the vertical direction at FIG. 10 (a)) of groove 54e of side edge frame element 54. This waterproofing member 61 might for example be formed from butylene rubber.

While the foregoing description concerts itself with the manner in which waterproofing member 61 is provided at one side edge frame element 54, waterproofing member(s) 61, 62, 62 are provided in like fashion at the other side edge frame element 53; and moreover, waterproofing member(s) 61 are provided in like fashion at upper frame element 51 and lower frame element 52.

This waterproofing member 61 is captured by frames 51, 52, 53, and 54 at the same time that solar cell module body 4 is captured thereby. Here, description will be carried out taking operation with respect to how the side edge portion of solar cell module body 4 is captured within side edge frame 54 to be representative of the others. To wit, when the side edge portion of solar cell module body 4 is captured within groove 54e of side edge frame element 54, waterproofing member 61 is deformed as a result of pressure from solar cell module body 4.

As shown at FIG. 10 (b), deformation of waterproofing member 61 is such that the free-edge side (the portion at the top at FIG. 10 (b)) of waterproofing member 61 is pressed by solar cell module body 4 against the interior of groove 54e, waterproofing member 61 being deformed so as to wrap around the outside perimeter portion of solar cell module body 4 in parallel fashion with respect to the inside surface of this groove 54e. Waterproofing member(s) 61 are therefore respectively present between the inside surface of groove 54e and the top surface and the bottom surface of the outside perimeter portion of solar cell module body 4. At this time, because, as mentioned above, the thickness dimension of waterproofing member 61 is set so as to be slightly larger than one half of the value obtained by subtracting the thickness dimension of solar cell module body 4 from the width dimension (the dimension in the vertical direction at FIG. 10 (b)) of groove 54e, waterproofing member 61 will upon completion of this capturing operation be compressed between the outside surface (at both the top and the bottom) of solar cell module body 4 and the inside surface of groove 54e.

A waterproofing structure having the foregoing constitution will make it possible to ensure watertightness between solar cell module body 4 and the frame body 5 which supports same.

However, with such waterproofing structure, there has been the problem that because the structure is such that, simultaneous with capturing of the outside perimeter edge portion of solar cell module body 4 within groove 54e of frame body 5, tape-like waterproofing member 61 is progressively captured within groove 54e of frame body 5 as it is pressed thereinto, notwithstanding the fact that one of the rim portions of waterproofing member 61 may in fact have been made to adhere to the tip portion of flange 54f, the pressure of insertion can nonetheless cause waterproofing member 61 to slip, making it difficult to achieve a seal which is uniform along the entire perimeter edge portion of solar cell module body 4. Furthermore, there has been the problem that because the portion that has slipped and extends outside of the groove of the frame body necessitates postprocessing in which a worker uses a knife or the like to remove it, this has increased work operations.

Furthermore, there has also been the problem that because tape-like waterproofing member 61 must be bent as it is progressively pressed into the interior of groove 54e of frame body 5, this insertion operation is also complicated, making it troublesome and time-consuming.

Moreover, there has also been the problem that because waterproofing member 61 is bent unnaturally at the corner portion(s) of frame body 5, it has been necessary to have another waterproofing member made available for such portion(s), and it has been difficult to adequately ensure watertightness at especially the corner portion(s).

And even where watertightness has been ensured in such fashion, with conventional solar cell modules there has been occurrence of a phenomenon whereby perimeter edge portions of the solar cell module body become discolored, turning yellow, with passage of time. Accordingly, there has also been a need to prevent such yellowing.

The present invention was conceived in order to solve such problems, it being an object thereof to provide a solar cell module and an edge face sealing member for same which will ensure watertightness (i.e., sealing) through a simple structure designed to facilitate operations during solar cell module assembly and which is capable of definitive prevention of solar cell module body yellowing.

### SUMMARY OF INVENTION

One or more embodiments of the present invention is or are predicated upon a solar cell module construction which is such that one or more solar cell module bodies are captured within one or more frame bodies. In addition, a structure may be adopted such that one or more edge face sealing members, frame-like in shape and formed in more or less parallel fashion with respect to one or more outer shapes of solar cell module body or bodies, is or are prepared; such edge face sealing member or members capturing at least one of the solar cell module body or bodies along substantially the entire edge portion perimeter thereof, and with these in this state, these being captured within at least one of the frame body or bodies.

To this end, edge face sealing member or members may be roughly c-shaped in cross-section, may comprise one or more upper sealing regions abutting one or more front surfaces of solar cell module body or bodies, may further comprise one or more lower sealing regions abutting one or more back surfaces of solar cell module body or bodies, and may further comprise one or more side sealing regions abutting one or more edge faces of solar cell module body or bodies.

In such case, edge face sealing member or members may be such that lower sealing region or regions is or are longer than upper sealing region or regions. Lower sealing region(s) being the portion(s) abutting back surface(s) of solar cell module body or bodies, because reception of light by solar cell(s) is not interfered with, there will be no problem even where it or they extend beyond frame body or bodies. Causing lower sealing region(s) to be made long in this manner makes it possible to prevent edge face sealing member(s) from easily falling out of solar cell module body or bodies. Furthermore, so long as solar cell module body or bodies may be captured therein, there is no limitation with regard to frame body shape, it being possible for example to employ the conventional frame body shape shown in FIG. 9. At the frame body shown in FIG. 9, because flange 54f, being the portion abutting lower sealing region(s), is longer than horizontal portion 54d of bent extension region 54b abutting lower sealing region(s), forming same such that its length matches that of this horizontal portion 54d will also be preferred from the standpoint of watertightness.

Furthermore, projections may be respectively formed on facing surfaces of upper sealing region(s) and lower sealing region(s). More specifically, such projections may comprise one or more single-rib or multiple-rib regions formed in more or less parallel fashion with respect to one or more perimeter edge portions of solar cell module body or bodies. With perimeter edge portion(s) of solar cell module body or bodies captured by sealing member(s), when such sealing member portion(s) are captured within groove(s) of frame body or bodies, because formation of such projections makes it possible for sealing member(s) to be compressed by groove(s) of frame body or bodies and for projection(s) to be squashed by top surface(s) and bottom surface(s) of solar cell module body or bodies, producing intimate contact therebetween, definitive sealing of edge face(s) of solar cell module body or bodies is permitted.

Furthermore, in such case, tip portion(s) of upper sealing region(s) and lower sealing region(s) may be disposed in inclined fashion at respectively facing sealing region surfaces. By disposing same in inclined fashion in this way, because tip portion(s) of upper sealing region(s) and lower sealing region(s) can also be made to press against top surface(s) and bottom surface(s) of solar cell module body or bodies, producing intimate contact therebetween, synergistic operation in combination with projection(s) permits more definitive sealing of edge face(s) of solar cell module body or bodies.

Moreover, still more benefit may be obtained where such sealing structure is applied to solar cell module body or bodies of integrally laminated superstrate construction such that laminated in order over one or more light-receiving glass surfaces constituting one or more front surfaces there are one or more light-receiving-surface sealing resin layers comprising ethylene vinyl acetate, one or more solar cells, one or more back-surface sealing resin layers comprising ethylene vinyl acetate, and one or more weather-resistant back-surface sealing films. Note however that the present invention is not limited to application in the context of superstrate structures, it also being possible to apply same for example to see-through-type solar cell modules wherein both the top and bottom surfaces are formed from glass.

Here, it is preferred that material(s) making up edge face sealing member(s) be polypropylenic and/or polystyrenic elastomer resin(s); more specifically, it is still more preferred that PP-EPDM (polypropylene - ethylene propylene diene copolymeric synthetic rubber) copolymer be for example employed as polypropylenic elastomer resin(s), and/or that polystyrene -isoprene copolymer be for example employed as polystyrenic elastomer resin(s).

Furthermore, it is preferable that such elastomer resin(s) comprise one or more additives of porous structure preventing yellowing of sealing resin layer or layers. More specifically, it is preferred that additive or additives comprise magnesium silicate. By thus causing elastomer resin(s) to comprise additive(s) of porous structure, magnesium silicate being cited as a prominent example thereof, changes in color due to low-molecular-weight oils present within elastomer(s) and/or yellowing of ethylene vinyl acetate (EVA) due to trace amounts of sulfur or other such inorganic substances can be prevented as a result of the absorptive action thereof, consequently making it possible to prevent yellowing of perimeter rim portions of solar cell module body or bodies.

Moreover, employment of additive(s) comprising ultraviolet-resistant agent(s) (e.g., hindered amine(s)) will make it possible to prevent degradation due to ultraviolet light.

### BRIEF DESCRIPTION OF DRAWINGS

FIG. 1 is an oblique view of the entirety of an edge face sealing member associated with a first embodiment of the present invention.

FIG. 2 is a cross-sectional view of section D-D in FIG. 1.

FIG. 3 (a) is a partial enlarged sectional view showing how an edge face sealing member of the first embodiment captures an edge portion of a solar cell module body, and FIG. 3 (b) is a partial enlarged sectional view showing how the edge portion of the solar cell module body as shown at FIG. 3 (a) is captured within a groove portion of a frame body.

FIG. 4 is a sectional view of an edge face sealing member associated with a second embodiment of the present invention.

FIG. 5 is a partial enlarged sectional view showing, where an edge portion of a solar cell module body is captured by an edge face sealing member, how this is moreover captured by a groove portion of a frame body.

FIG. 6 (a) is a plan view of a solar cell module; FIG. 6 (b) indicating the view from arrow B at FIG. 6 (a), and FIG. 6 (c) indicating the view from arrow C at FIG. 6 (a).

FIG. 7 is a partial enlarged sectional view showing an edge portion of solar cell module body of superstrate construction.

FIG. 8 is an oblique exploded view of region III in FIG. 6.

FIG. 9 is a sectional view of a frame body.

FIG. 10 (a) is a sectional view showing arrangement of a waterproofing member; FIG. 10 (b) is a sectional view showing deformation of a waterproofing member.

### DESCRIPTION OF PREFERRED EMBODIMENTS

Below, embodiments of the present invention are described with reference to the drawings.

### FIRST EMBODIMENT

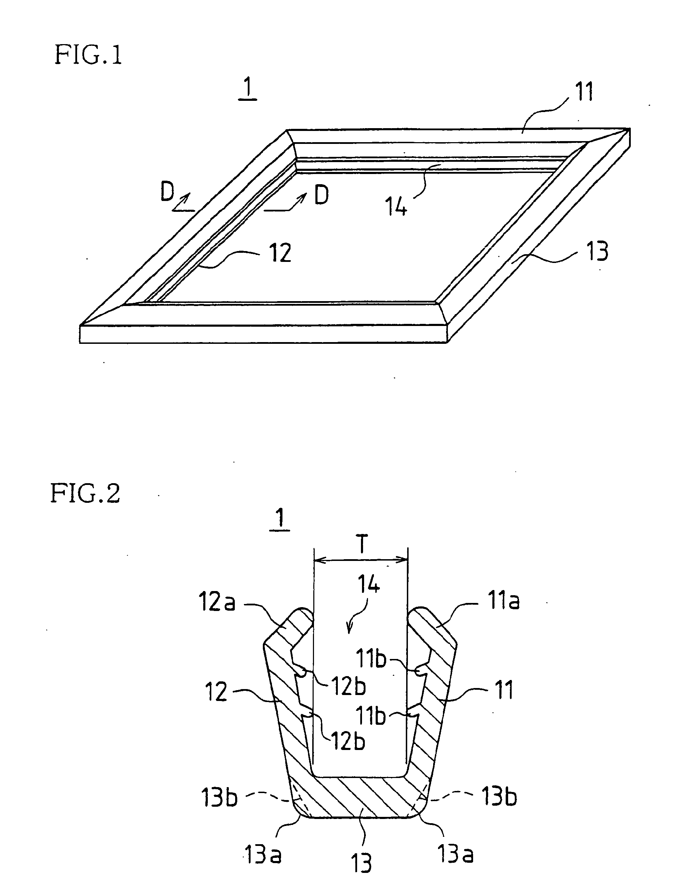

FIG. 1 is an oblique view of the entirety of an edge face sealing member 1 associated with a first embodiment of the present invention, and FIG. 2 is a cross-sectional view of section D-D in FIG. 1. Note that, in the present first embodiment, the description below is carried out in terms of a solar cell module body employing superstrate structure such as that of solar cell module body 4 shown in FIG. 7, and in terms of a frame body employing structure such as that of frame body 5 shown in FIG. 9.

This edge face sealing member 1, which is frame-like in shape and is formed in more or less parallel fashion with respect to the outer shape of solar cell module body 4 shown in FIG. 6, captures solar cell module body 4 along substantially the entire edge portion 45 perimeter thereof, and with these in this state, this is captured within the frames 51, 52, 53 and 54 of frame body 5 (see FIG. 7).

As shown in FIG. 2, this edge face sealing member 1 is roughly c-shaped in cross-section and/or roughly u-shaped in cross-section, and comprises upper sealing region 11 abutting light-receiving glass surface 41 which constitutes the front surface of solar cell module body 4; lower sealing region 12 abutting weather-resistant back-surface sealing film 44 of solar cell module body 4; and side sealing region 13 abutting edge face 45a (see FIG. 7) of solar cell module body 4. This upper sealing region 11, this lower sealing region 12, and this side sealing region 13 form groove recess 14 which captures edge portion 45 of solar cell module body 4.

Furthermore, upper sealing region 11 and lower sealing region 12 are disposed so as to open somewhat to the outside therefrom at either side from edge portions 13a, 13a of side sealing region 13, and tip portions 11a and 12a are formed in bent fashion so as to be inclined toward each other, i.e., toward groove recess 14. Distance T between these two tip portions 11a and 12a is roughly the same as or is somewhat less than the thickness of edge portion 45 of solar cell module body 4. Furthermore, edge portions 13a, 13a of side sealing region 13 are formed so as to be curved in order to facilitate capture thereof by frame body 5. Moreover, as indicated by the broken line in FIG. 2, diagonal cuts may be made therein so as to produce chamfered surfaces 13b, 13b.

Respectively formed on facing surfaces of upper sealing region 11 and lower sealing region 12, formed as described above, there are projections 11b, 12b. These projections 11b, 12b may take the form of single-rib and/or multiple-rib regions (two ribs being formed in the present first embodiment) formed in more or less parallel fashion with respect to perimeter edge portions (sides) of solar cell module body 4, i.e., in more or less parallel fashion with respect to the long direction of groove recess 14.

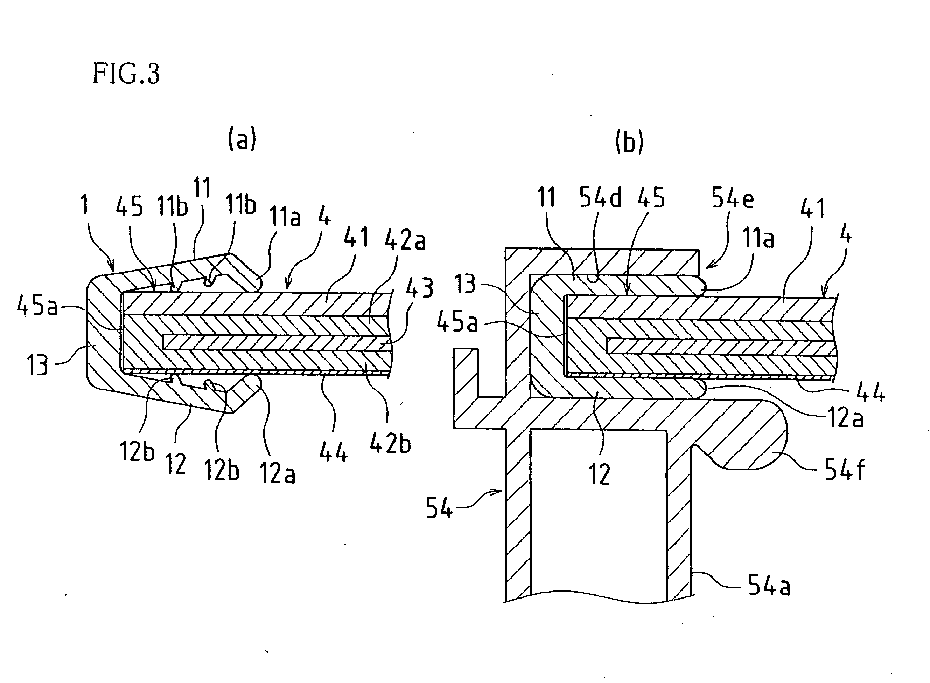

FIG. 3 (a) shows how edge face sealing member 1, constituted as described above, captures edge portion 45 of solar cell module body 4.

In this state, while projections 11b, 12b only barely, if at all, abut light-receiving glass surface 41 and weather-resistant back-surface sealing film 44 of solar cell module body 4, tip portions 11a and 12a of upper sealing region 11 and lower sealing region 12 do contact light-receiving glass surface 41 and weather-resistant back-surface sealing film 44 of solar cell module body 4 such that they are somewhat compressed thereagainst and possess force sufficient to retain edge portion 45 of solar cell module body 4. Due to this fact, it is possible to rest assured that edge face sealing member 1 will not easily slip off of edge portion 45 of solar cell module body 4.

With these in this state, upon causing edge portion 45 of solar cell module body 4 to be captured by groove 54e of frame body 5, edge face sealing member 1 is deformed in parallel fashion with respect to the inside surface of groove 54e as shown at FIG. 3 (b), projections 11b, 12b (not shown) and tip portions 11a and 12a of upper sealing region 11 and lower sealing region 12 being squashed and coming into intimate contact with light-receiving glass surface 41 and weather-resistant back-surface sealing film 44 of solar cell module body 4. At this time, moreover, side sealing region 13 of edge face sealing member 1 likewise comes in intimate contact with edge face 45a of solar cell module body 4, resulting in manufacture of a solar cell module in which edge face 45a of solar cell module body 4 is completely sealed.

### SECOND EMBODIMENT

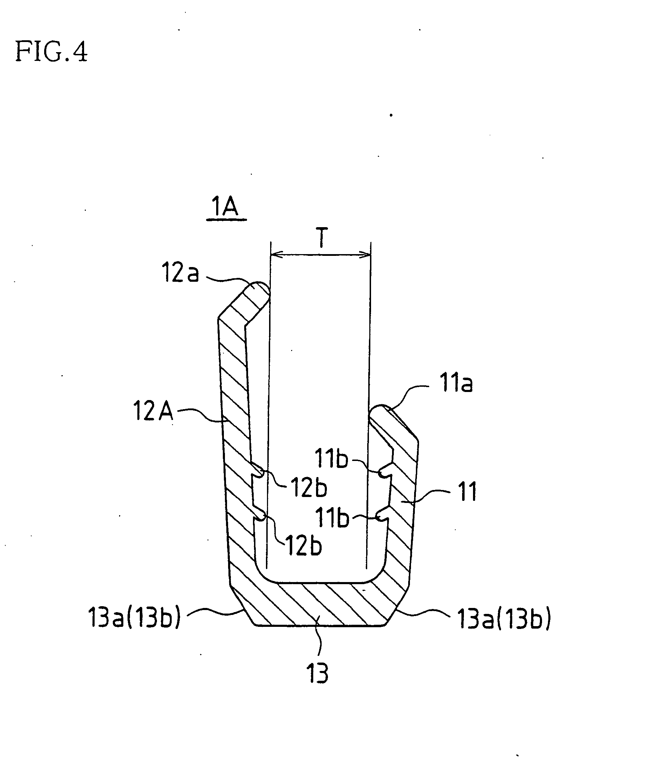

FIG. 4 is a sectional view of edge face sealing member 1A associated with a second embodiment of the present invention.

Edge face sealing member 1A of the present second embodiment differs from edge face sealing member 1 of the foregoing first embodiment in that lower sealing region 12A abutting weather-resistant back-surface sealing film 44 of solar cell module body 4 is formed so as to be longer than upper sealing region 11 abutting light-receiving glass surface 41 of solar cell module body 4, the constitution thereof being in other respects similar to that of edge face sealing member 1 of the foregoing first embodiment. Accordingly, where components are identical to those at edge face sealing member 1 of the first embodiment, identical reference numerals will be used and detailed description thereof will be omitted.

The reason for thus forming lower sealing region 12A such that it is longer than upper sealing region 11 is that, as shown in FIG. 9, flange 54f is provided at the inside edge of top face 54c of frame main body 54a, and this surface is longer than horizontal portion 54d of bent extension region 54b by an amount corresponding to this flange 54f. Lower sealing region 12A is therefore formed such that the length thereof more or less matches the length from the basal edge portion of top face 54c (the region at which it is connected to bent extension region 54b) to the tip of flange 54f.

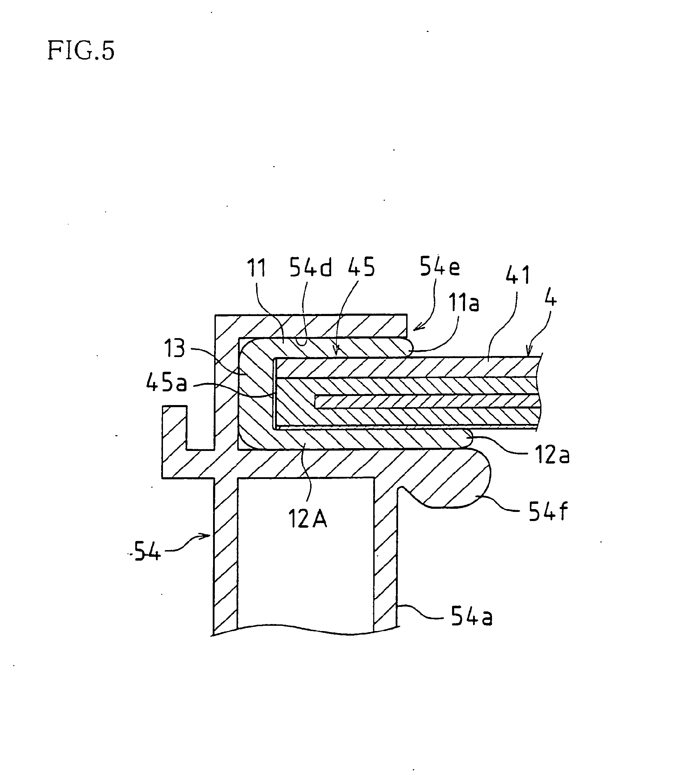

FIG. 5 is a partial enlarged sectional view showing a solar cell module in which, where edge portion 45 of solar cell module body 4 is captured by edge face sealing member 1A constituted as described above, this is moreover captured by frame body 5.

With these in this state, edge face sealing member 1 is deformed in parallel fashion with respect to the inside surface of groove 54e of frame body 5, projections 11b, 12b (not shown) and tip portions 11a and 12a of upper sealing region 11 and lower sealing region 12A being squashed and coming into intimate contact with light-receiving glass surface 41 and weather-resistant back-surface sealing film 44 of solar cell module body 4. In such case, because lower sealing region 12A is brought into intimate contact therewith over the entirety, more or less, of flange 54f and top face 54c of groove 54e, watertightness at the back surface of solar cell module body 4 is improved. At this time, moreover, side sealing region 13 of edge face sealing member 1 likewise comes in intimate contact with edge face 45a of solar cell module body 4, resulting in manufacture of a solar cell module in which edge face 45a of solar cell module body 4 is completely sealed.

Note also that because, as shown in FIG. 7, solar cell module body 4, which is of superstrate construction, is such that, in contrast to light-receiving glass surface 41 at the front surface thereof, the back surface thereof is thin weather-resistant film 44, where integral lamination is carried out the back surface will be forcibly pulled upon such that it becomes somewhat inclined. When lower sealing region 12A is made long as in the present second embodiment, this will also have the advantage that it will be possible to cause edge portion 45 of solar cell module body 4 to be definitively captured by edge face sealing member 1A, any such inclination having little effect thereon. Or stating this conversely, this has the benefit of also preventing edge face sealing member 1A from slipping off of solar cell module body 4.

Next, description is carried out with respect to materials employed at edge face sealing member 1 of the foregoing first embodiment and at edge face sealing member 1A of the second embodiment.

It is preferred that material(s) making up edge face sealing member(s) 1, 1 A be polypropylenic and/or polystyrenic elastomer resin(s). More specifically, it is still more preferred that PP-EPDM (polypropylene - ethylene propylene diene copolymeric synthetic rubber) copolymer be for example employed as polypropylenic elastomer resin(s), and/or that polystyrene - isoprene copolymer be for example employed as polystyrenic elastomer resin(s).

Polypropylenic and polystyrenic elastomer resins possess characteristics such as lightness in weight due to low specific gravity, manufacturability and recyclability, designability with respect to coloration, weather resistance (retention of physical properties over long periods), sealability, aging as a result of heat, flexibility at low temperature (-40° C), dimensional stability of extruded product, flexibility with respect to design of cross-section of extruded product, thermal deposition, and so forth. Because complicated operations are not necessary such as is the case with vulcanized rubber, it being possible to easily carry out extrusion molding in the same manner as with ordinary plastics, such resins are suitable for use where precise cross-sectional dimensions are required, as is the case with the sealing material for the solar cell module body of the present invention.

Moreover, since with conventional solar cell modules there has been occurrence of a phenomenon whereby perimeter edge portions of solar cell module body or bodies become discolored, turning yellow, with passage of time, in order to here also achieve improvement with respect to such issues as well, such elastomer resin(s) may in accordance with the present invention be made to comprise additive(s) of porous structure which will prevent yellowing of sealing resin (EVA) layer(s). More specifically, magnesium silicate may be employed as additive. By thus causing elastomer resin(s) to comprise additive(s) of porous structure, magnesium silicate being cited as a prominent example thereof, sulfur present within sealing resin(s) (EVA) in solar cell module body or bodies can be absorbed, as a result of which yellowing of perimeter edge portions of solar cell module body or bodies can be prevented.

Moreover, in order to test for presence of yellowing at perimeter rim portions of solar cell module bodies, the present inventors prepared edge face sealing members 1, 1A comprising PP-EPDM containing on the order of 1 to 1.5% magnesium silicate, and, after assembling same such that solar cell module bodies 4 employing EVA sealing resin(s) were captured by edge face sealing members 1, 1A thus prepared, carried out high-temperature, high-humidity storage testing pursuant to JISC 8917. As a result, yellowing of EVA sealing resin(s) at edge portions 54 of solar cell module bodies 4 was not observed even after 1000 hours at 85 percent humidity.

Furthermore, in addition to magnesium silicate, employment of additive(s) comprising ultraviolet-resistant agent(s) (e.g., hindered amine(s)) will make it possible to prevent degradation due to ultraviolet light.

As described above, one or more embodiments of the present invention is or are predicated upon a solar cell module construction which is such that one or more solar cell module bodies are captured within one or more frame bodies. In addition, a structure may be adopted such that one or more edge face sealing members, frame-like in shape and formed in more or less parallel fashion with respect to one or more outer shapes of solar cell module body or bodies, is or are prepared; such edge face sealing member or members capturing at least one of the solar cell module body or bodies along substantially the entire edge portion perimeter thereof, and with these in this state, these being captured within at least one of the frame body or bodies. Because a construction is thus adopted in which frame-shaped, integral-type edge face sealing member(s) capture solar cell module body or bodies along substantially the entire edge portion perimeter thereof, definitive sealing of solar cell module body or bodies is permitted, permitting definitive prevention of entry by water. Furthermore, because edge face sealing member(s) which is or are c-shaped and/or u-shaped in cross-section is or are made to capture solar cell module body or bodies, and while in this state, these are then caused to be captured by frame body or bodies, it is possible to rest assured that edge face sealing member(s) will not slip when caused to be captured by frame body or bodies, and moreover, ease of operations with respect to the capturing step is improved.

Furthermore, causing lower sealing region(s) of edge face sealing member(s) to be formed so as to be longer than upper sealing region(s) thereof makes it possible to prevent edge face sealing member(s) from easily falling out of solar cell module body or bodies, and also improves watertightness at the back surface of solar cell module body or bodies.

Furthermore, when such edge face sealing member(s) are captured within groove(s) of frame body or bodies, because formation of projections on facing surfaces of upper sealing region(s) and lower sealing region(s) makes it possible for edge face sealing member(s) to be compressed by groove(s) of frame body or bodies and for projection(s) to be squashed by top surface(s) and bottom surface(s) of solar cell module body or bodies, producing intimate contact therebetween, definitive sealing of edge face(s) of solar cell module body or bodies is permitted. Moreover, by disposing tip portion(s) of upper sealing region(s) and lower sealing region(s) so as to incline toward recess(es), because tip portion(s) of upper sealing region(s) and lower sealing region(s) can also be made to press against top surface(s) and bottom surface(s) of solar cell module body or bodies, producing intimate contact therebetween, synergistic operation in combination with projection(s) permits more definitive sealing of edge face(s) of solar cell module body or bodies.

Furthermore, polypropylenic and/or polystyrenic elastomer resin(s), and more specifically, PP-EPDM copolymer(s) and/or polystyrene - isoprene copolymer(s), is or are employed as material(s) making up edge face sealing member(s). Furthermore, such elastomer resin(s) contain magnesium silicate serving as additive(s) of porous structure preventing yellowing of sealing resin layer(s). By thus causing elastomer resin(s) to comprise additive(s) of porous structure, magnesium silicate being cited as a prominent example thereof, sulfur present within EVA can be absorbed, as a result of which yellowing of perimeter rim portions of solar cell module body or bodies can be prevented. Moreover, employment of additive(s) comprising ultraviolet-resistant agent(s) will make it possible to prevent degradation due to ultraviolet light.

## Claims

1. A solar cell module edge face sealing member (1, 1A) for, when one or more solar cell module bodies (4) are captured within one or more frame bodies (5), sealing one or more gaps between at least one of the solar cell module bodies (4) and the at least one frame bodies (5):
the edge face sealing member (1, 1A) being frame-like in shape and formed in parallel fashion with respect to one or more outer shapes of at least one of the solar cell module bodies (4); and
the edge face sealing member (1, 1A) being configured to capture the at least one solar cell module bodies (4) along the entire edge portion (4, 5) perimeter thereof, and to be then captured within the at least one frame bodies (5), and **characterized in that**
the edge face sealing member (1, 1A) is c-shaped in cross-section or u-shaped in cross-section, comprising an upper sealing region (11) configured to abut a front surface of the at least one solar cell module bodies (4), a lower sealing region (12) configured to abut a back surface of the at least one solar cell module bodies (4), and a side sealing region (13) configured to abut an edge face (45a) of the at least one solar cell module bodies (4);
the upper sealing region (11) and the lower sealing region (12) are disposed so as to open to the outside therefrom at either side from edge portions (13a) of the side sealing region (13) to capture the at least one solar cell module bodies (4) and
tip portions (11a, 12a) of the upper sealing region (11) and the lower sealing portion (12) are formed in bent fashion so as to be inclined toward each other, with the distance (T) between these tip portions (11a, 12a) being the same as or being less than the thickness of the edge face (45a) of the at least one solar cell module bodies (4) to be captured.

2. A solar cell module edge face sealing member (1, 1A) according to claim 1 wherein at least one of the lower sealing region (12) or regions is longer than at least one of the upper sealing region (11) or regions.

3. A solar cell module edge face sealing member (1, 1A) according to claim 1 or 2 wherein:
at least one surface of at least one of the upper sealing region (11) or regions and at least one surface of at least one of the lower sealing region (12) or regions face each other; and
one or more projections (11b, 12b) are formed on each of at least two respectively facing surfaces among the upper and lower sealing region surfaces which face each other.

4. A solar cell module edge face sealing member (1, 1A) according to claim 3 wherein at least one of the projection (11b, 12b) or projections comprises one or more single-rib or multiple-rib regions formed in more or less parallel fashion with respect to one or more perimeter edge portions (45) of at least one of the solar cell module body (4) or bodies.

5. A solar cell module edge face sealing member (1, 1A) according to claim 3 wherein one or more tip portions (11a, 12a) of at least one of the lower sealing region (12) or regions and at least one of the upper sealing region (11) or regions are disposed in inclined fashion at respectively facing sealing region surfaces.

6. A solar cell module edge face sealing member (1, 1A) according to claim 1 wherein at least one of the solar cell module body (4) or bodies is of integrally laminated superstrate construction such that laminated in order over one or more light-receiving glass surfaces (41) constituting one or more front surfaces there are:
one or more light-receiving-surface sealing resin layers comprising ethylene vinyl acetate;
one or more solar cells;
one or more back-surface sealing resin layers comprising ethylene vinyl acetate; and
one or more weather-resistant back-surface sealing films.

7. A solar cell module edge face sealing member (1, 1A) according to claim 6 wherein at least one material making up the edge face sealing member is elastomer resin.

8. A solar cell module edge face sealing member (1. 1A) according to claim 7 wherein the elastomer resin comprises one or more polypropylenic and/or polystyrenic resins.

9. A solar cell module edge face sealing member (1, 1A) according to claim 8 wherein:
at least one of the polypropylenic elastomer resin or resins is PP-EPDM copolymer; and
at least one of the polystyrenic elastomer resin or resins is polystyrene - isoprene copolymer.

10. A solar cell module edge face sealing member (1, 1A) according to claim 8 or 9 wherein the elastomer resin comprises one or more additives of porous structure preventing yellowing of at least one of the sealing resin layer or layers.

11. A solar cell module edge face sealing member (1, 1A) according to claim 10 wherein at least one of the additive or additives is magnesium silicate.

12. A solar cell module edge face sealing member (1, 1A) according to claim 11 wherein at least one of the additive or additives further comprises one or more ultraviolet-resistant agents.

13. A solar cell module including a solar cell edge face sealing member (1, 1A) according to any of claims 1 - 12.

14. A solar cell module according to claim 13 wherein at least one of the solar cell module body (4) or bodies is of integrally laminated superstrate construction such that laminated in order over one or more light-receiving glass surfaces constituting one or more front surfaces there are:
one or more light-receiving-surface sealing resin layers comprising ethylene vinyl acetate;
one or more solar cells;
one or more back-surface sealing resin layers comprising ethylene vinyl acetate; and
one or more weather-resistant back-surface sealing films.

## Patentansprüche

1. Kantenflächenversiegelungselement (1, 1A) für ein Solarzellenmodul zum Versiegeln von ein oder mehr Lücken, wenn ein oder mehr Solarzellenmodulelemente (4) innerhalb eines oder mehr Rahmenelemente (5) aufgenommen werden, zwischen dem mindestens einen Solarzellenmodulelement (4) und dem mindestens einen Rahmenelement (5),
wobei das Kantenflächenversiegelungselement (1, 1A) in seiner Form rahmenartig und in paralleler Art und Weise in Bezug auf ein oder mehr äußere Formen des mindestens einen Solarzellenmoduls (4) ausgebildet ist, und
wobei das Kantenflächenversiegelungselement (1, 1A) ausgebildet ist, das mindestens eine Solarzellenmodulelement (4) entlang des Umfangs des gesamten Kantenbereichs (4, 5) davon aufzunehmen und dann innerhalb des mindestens einen Rahmenelements aufgenommen zu werden,
**dadurch gekennzeichnet,**
**dass** das Kantenflächenversiegelungselement (1, 1A) im Querschnitt c-förmig oder u-förmig ausgebildet ist mit einem oberen Versiegelungsbereich (11), der dazu ausgebildet ist, an eine Vorderfläche des mindestens einen Solarzellenmoduls (4) anzugrenzen, mit einem unteren Versiegelungsbereich (12), der ausgebildet ist, an eine Rückfläche des mindestens einen Solarzellenmodulelements (4) anzugrenzen, und mit einem Seitenversiegelungsbereich (13), welcher ausgebildet ist, an eine Kantenfläche (45a) des mindestens einen Solarzellenmodulelements (4) anzugrenzen,
**dass** der obere Versiegelungsbereich (11) und der untere Versiegelungsbereich (12) so angeordnet sind, dass sie sich zur Außenseite davon an einer Seite von Kantenbereichen (13a) des Seitenversiegelungsbereichs (13) öffnen, um das mindestens eine Solarzellenmodulelement (4) aufzunehmen, und
**dass** äußerste oder Spitzenbereiche (11a, 12a) des oberen Versiegelungsbereichs (11) und des unteren Versiegelungsbereichs (12) in gebogener Art und Weise ausgebildet sind, um aufeinander zu geneigt zu sein, wobei der Abstand (T) zwischen diesen äußersten oder Spitzenbereichen (11a, 12a) derselbe ist oder geringer ist als die Dicke der Kantenfläche des mindestens einen aufzunehmenden Solarzellenmodulelements (4).

2. Kantenflächenversiegelungselement (1, 1A) für ein Solarzellenmodul nach Anspruch 1,
wobei mindestens einer der unteren Versiegelungsbereiche (12) länger ist als mindestens einer der oberen Versiegelungsbereiche (11).

3. Kantenflächenversiegelungselement (1, 1A) für ein Solarzellenmodul nach einem der Ansprüche 1 oder 2,
wobei:
mindestens eine Fläche des mindestens einen der oberen Versiegelungsbereiche (11) und mindestens eine Fläche des mindestens einen der unteren Versiegelungsbereiche (12) einander gegenüberliegen und
dass ein oder mehr Vorsprünge (11b, 12b) an jedem der mindestens zwei jeweiligen gegenüberliegenden Flächen unter den oberen und unteren Versiegelungsbereichsflächen, die einander gegenüberliegen, ausgebildet sind.

4. Kantenflächenversiegelungselement (1, 1A) für ein Solarzellenmodul nach Anspruch 3,
wobei mindestens einer der Vorsprünge (11b, 12b) ein oder mehr Einzellamellen- oder Mehrfachlamellenbereiche aufweisen, die in mehr oder weniger paralleler Art und Weise in Bezug auf ein oder mehr Umfangskantenbereiche (45) mindestens eines Solarzellenmodulelements (4) ausgebildet sind.

5. Kantenflächenversiegelungselement (1, 1A) für ein Solarzellenmodul nach Anspruch 3,
wobei ein oder mehr äußerste oder Spitzenbereiche (11a, 12a) mindestens eines der unteren Versiegelungsbereiche (12) und mindestens eines der oberen Versiegelungsbereiche (11) in geneigter Art und Weise an jeweiligen gegenüberliegenden Versiegelungsbereichsflächen angeordnet sind.

6. Kantenflächenversiegelungselement (1, 1A) für ein Solarzellenmodul nach Anspruch 1,
wobei mindestens eines der Solarzellenmodulelemente (4) als einteilig oder einstückig geschichteter Superstrataufbau derart geschichtet vorliegt, dass es geschichtet über ein oder mehr Lichtempfangsglasflächen (41) vorliegt, die ein oder mehr vordere Flächen bilden, welche sind:
eine oder mehr Versiegelungsharzschichten der Lichtempfangsflächen mit Ethylenvinylacetat,
eine oder mehr Solarzellen,
eine oder mehr Versiegelungsharzschichten für Rückseiten mit Ethylenvinylacetat und
eine oder mehr wetterbeständige Versiegelungsschichten für Rückseiten.

7. Kantenflächenversiegelungselement (1, 1A) für ein Solarzellenmodul nach Anspruch 6,
wobei mindestens ein ein Kantenflächenversiegelungselement bildendes Material ein Elastomerharz ist.

8. Kantenflächenversiegelungselement (1, 1A) für ein Solarzellenmodul nach Anspruch 7,
wobei das Elastomerharz ein oder mehr Poylpropylen- und/oder Polystyrenharze aufweist.

9. Kantenflächenversiegelungselement (1, 1A) für ein Solarzellenmodul nach Anspruch 8,
wobei:
mindestens eines der Polypropylenelastomerharze ein PP-EPDM-Copolymer ist und
mindestens eines der Polystyrenelastomerharze ein Polystyren-Isopren-Copolymer ist.

10. Kantenflächenversiegelungselement (1, 1A) für ein Solarzellenmodul nach Anspruch 8 oder 9,
wobei das Elastomerharz ein oder mehr Additive von porösem Aufbau aufweist, welche ein Vergilben mindestens einer der Versiegelungsharzschichten verhindert.

11. Kantenflächenversiegelungselement (1, 1A) für ein Solarzellenmodul nach Anspruch 10,
wobei das mindestens eine Additiv Magnesiumsilikat ist.

12. Kantenflächenversiegelungselement (1, 1A) für ein Solarzellenmodul nach Anspruch 11,
wobei mindestens eines der Additive des Weiteren ein oder mehrere UV-beständige Agenzien aufweist.

13. Solarzellenmodul mit einem Kantenflächenversiegelungselement (1, 1A) für ein Solarzellenmodul nach einem der Ansprüche 1 bis 12.

14. Solarzellenmodul nach Anspruch 13,
wobei mindestens eines der Solarzellenmodulelemente (4) als einteilig oder einstückig geschichteter Superstrataufbau derart geschichtet vorliegt, dass es geschichtet über ein oder mehr Lichtempfangsglasflächen (41) vorliegt, die ein oder mehr vordere Flächen bilden, welche sind:
eine oder mehr Versiegelungsharzschichten der Lichtempfangsflächen mit Ethylenvinylacetat,
eine oder mehr Solarzellen,
eine oder mehr Versiegelungsharzschichten für Rückseiten mit Ethylenvinylacetat und
eine oder mehr wetterbeständige Versiegelungsschichten für Rückseiten.

## Revendications

1. Elément de scellement de face de bord de module de cellule solaire (1, 1A) pour, lorsqu'au moins un corps de module de cellule solaire (4) est pris dans au moins un corps de cadre (5), sceller au moins un espace entre le ou les corps de module de cellule solaire (4) et le ou les corps de cadre (5) ;
l'élément de scellement de face de bord (1, 1A) étant en forme de cadre et formé d'une manière parallèle relativement à au moins une forme externe du ou des corps de module de cellule solaire (4) ; et
l'élément de scellement de face de bord (1, 1A) étant configuré pour emprisonner le ou les corps de module de cellule solaire (4) suivant la totalité du périmètre de partie formant bord (45) de celui-ci ou ceux-ci, et pour être ensuite emprisonné dans le ou les corps de cadre (5), et **caractérisé en ce que**
l'élément de scellement de face de bord (1, 1A) est en forme de C ou en forme de U en coupe transversale, lequel comprend une région de scellement supérieure (11) conçue pour venir en butée contre une surface avant du ou des corps de module de cellule solaire (4), une région de scellement inférieure (12) conçue pour venir en butée contre une surface arrière du ou des corps de module de cellule solaire (4) et une région de scellement latérale (13) conçue pour venir en butée contre une face de bord (45a) du ou des corps de module de cellule solaire (4) ;
la région de scellement supérieure (11) et la région de scellement inférieure (12) sont disposées de manière à s'ouvrir vers l'extérieur à partir d'elles-mêmes de chaque côté à partir des parties formant bords (13a) de la région de scellement latérale (13) pour la prise du ou des corps de module de cellule solaire (4) et
des parties formant pointes (11a, 12a) de la région de scellement supérieure (11) et de la région de scellement inférieure (12) sont formées d'une manière cintrée de façon à être inclinées l'une vers l'autre, la distance (T) entre ces parties formant pointes (11 a, 12a) étant la même ou étant inférieure à l'épaisseur de la face de bord (45a) du ou des corps de module de cellule solaire (4) devant être emprisonné(s).

2. Elément de scellement de face de bord de module de cellule solaire (1, 1A) conformément à la revendication 1, dans lequel au moins l'une parmi la région ou les régions de scellement inférieure(s) (12) est plus longue qu'au moins l'une parmi la région ou les régions de scellement supérieure(s) (11).

3. Elément de scellement de face de bord de module de cellule solaire (1, 1A) conformément à la revendication 1 ou 2, dans lequel :
au moins une surface d'au moins l'une parmi la région ou les régions de scellement supérieure(s) (11) et au moins une surface d'au moins l'une parmi la région ou les régions de scellement inférieure(s) (12) sont en regard l'une de l'autre ; et
au moins un élément saillant (11 b, 12b) est formé sur chacune d'au moins deux surfaces se faisant face respectivement parmi les surfaces de régions de scellement supérieures et inférieures en regard les unes des autres.

4. Elément de scellement de face de bord de module de cellule solaire (1, 1A) conformément à la revendication 3, dans lequel au moins l'un parmi l'élément faisant saillie ou les éléments faisant saillie (11 b, 12b) comprend au moins une région à nervure unique ou à nervures multiples formée d'une manière plus ou moins parallèle relativement à au moins une partie formant bord de périmètre (45) d'au moins l'un parmi le ou les corps de module de cellule solaire (4).

5. Elément de scellement de face de bord de module de cellule solaire (1, 1A) conformément à la revendication 3, dans lequel au moins une partie formant pointe (11a, 12a) d'au moins l'une parmi la région ou les régions de scellement inférieure(s) (12) et au moins l'une parmi la région ou les régions de scellement supérieure(s) (11) sont disposées de manière inclinée au niveau de surfaces de région de scellement se faisant face respectivement.

6. Elément de scellement de face de bord de module de cellule solaire (1, 1A) conformément à la revendication 1, dans lequel au moins l'un parmi le ou les corps de module de cellule solaire (4) est d'une construction de superstrat stratifié d'un seul tenant de sorte que sont stratifiés dans l'ordre sur au moins une surface de verre réceptrice de lumière (41) constituant une ou plusieurs surface(s) avant :
au moins une couche de résine de scellement de surface réceptrice de lumière comprenant de l'acétate de vinyle-éthylène ;
au moins une cellule solaire ;
au moins une couche de résine de scellement de surface arrière comprenant de l'acétate de vinyle-éthylène ; et
au moins un film de scellement de surface arrière résistant aux intempéries.

7. Elément de scellement de face de bord de module de cellule solaire (1, 1A) conformément à la revendication 6, dans lequel au moins un matériau constituant l'élément de scellement de face de bord est de la résine d'élastomère.

8. Elément de scellement de face de bord de module de cellule solaire (1, 1A) conformément à la revendication 7, dans lequel la résine d'élastomère comprend une ou plusieurs résine(s) polypropylénique(s) et/ou polystyrénique(s).

9. Elément de scellement de face de bord de module de cellule solaire (1, 1 A) conformément à la revendication 8, dans lequel
au moins l'une parmi la résine ou les résines d'élastomère polypropylénique(s) est un copolymère PP-EPDM (polypropylène/terpolymère d'éthylène-propylène-diène) ; et
au moins l'une parmi la résine ou les résines d'élastomère polystyrénique(s) est un copolymère de polystyrène-isoprène.

10. Elément de scellement de face de bord de module de cellule solaire (1, 1A) conformément à la revendication 8 ou 9, dans lequel la résine d'élastomère comprend au moins un additif de structure poreuse empêchant le jaunissement d'au moins l'une parmi la couche ou les couches de résine de scellement.

11. Elément de scellement de face de bord de module de cellule solaire (1, 1A) conformément à la revendication 10, dans lequel au moins l'un parmi l'additif ou les additifs est du silicate de magnésium.

12. Elément de scellement de face de bord de module de cellule solaire (1, 1A) conformément à la revendication 11, dans lequel au moins l'un parmi l'additif ou les additifs comprend au moins un agent résistant aux ultraviolets.

13. Module de cellule solaire comprenant un élément de scellement de face de bord de cellule solaire (1, 1A) conformément à l'une quelconque des revendications 1 à 12.

14. Module de cellule solaire conformément à la revendication 13, dans lequel au moins l'un parmi le corps ou les corps de module de cellule solaire (4) est d'une construction de superstrat stratifié d'un seul tenant de sorte que sont stratifiés dans l'ordre sur au moins une surface de verre réceptrice de lumière constituant une ou plusieurs surface(s) avant :
au moins une couche de résine de scellement de surface réceptrice de lumière comprenant de l'acétate de vinyle-éthylène ;
au moins une cellule solaire ;
au moins une couche de résine de scellement de surface arrière comprenant de l'acétate de vinyle-éthylène ; et
au moins un film de scellement de surface arrière résistant aux intempéries.
